# EUROPEAN PATENT APPLICATION

(11) **EP 3 916 223 A1**
(43) Date of publication of application: **01.12.2021**
(21) Application number: 20177395.9
(22) Date of filing: 29.05.2020
(51) Int. Cl.: F03D 17/00, F03D 7/02, G06N 20/00

(54) **OBJECT DETECTION IN AN INTERIOR OF A TURBINE HUB**

(71) Applicant: Siemens Gamesa Renewable Energy A/S, 7330 Brande (DK)
(72) Inventor: Kroeier, Kristian, 7400 Herning (DK)
(74) Representative: Aspacher, Karl-Georg

(57) **Abstract**

The invention relates to a method for detecting an object in an interior of a turbine hub. The method comprises emitting a primary light by a light source, sampling at least a part of the interior of the turbine hub by emitting the primary light into different directions, detecting a secondary light by a photon detector, wherein the secondary light corresponds to the primary light reflected in the interior of the turbine hub, generating at least one point cloud based on the secondary light detected by the photon detector, and detecting an object in the interior of the turbine hub based on the at least one point cloud.

## Description

### TECHNICAL FIELD

Various examples relate to methods for detecting an object in an interior of a turbine hub. In particular, object detection in a turbine hub of a wind turbine is addressed. Other examples relate to further analysis of the detected object.

### BACKGROUND

A turbine, such as a wind turbine, can be damaged by loose objects inside the turbine hub. Loose objects might be metal objects like screws, plates and so on. In particular, functional parts which are being moved during the operation of the wind turbine, electrical or hydraulic parts can be damaged by such loose objects. Parts of the turbine which are moving by the rotation of the turbine hub transport the loose objects. This lifts loose objects inside a turbine hub to a certain height. Afterwards, the loose objects fall down due to gravity. For instance, if a loose object lies on the ground of a hub when the hub starts to rotate, the object will be transported upwards caused by the rotation of the hub and finally will fall down. This continues during operation of the wind turbine so that more and more damage occurs. Especially, more damage is caused in those areas with vulnerable parts.

Various techniques of detecting loose objects inside a turbine hub are known. For example, the detection of loose objects in a turbine hub is performed, according to reference implementations, using a microphone. Sounds are recorded with the microphone and the recorded sounds are analyzed for detecting loose objects. A solution of acoustically monitoring loose objects inside wind turbines has been proposed for example by US 6 785 637 B1 or US 2012 0321 464 A1. However, such detection techniques analyzing sounds have certain disadvantages and limitations. For example, soft and light items sometimes cannot be detected and will not trigger a warning as a microphone will not capture any noise.

Another technique of detecting objects in a turbine hub is a camera which records the interior of the turbine hub. The drawback of the camera is that it would require proper lightening in the hub. Thus, a camera is vulnerable to changes in lightening.

Further, methods using a sensor for detecting foreign objects are known. A corresponding method is described for example in US 2011 293 417 A1. The sensor can be any member that can output the influence of a contact member touched by the foreign object as a change of a physical quantity and may be a physical, mechanical or electrical sensor. In such methods, the foreign object can only be detected if the foreign object touches the sensor und if the interaction of the foreign object with the sensor is sufficient.

### SUMMARY

Therefore, there is a need for improved techniques for detecting objects in an interior of a turbine hub, especially when the turbine hub is rotating. In particular, there is a need for techniques which overcome or alleviate the disadvantages of the above mentioned techniques; for example in terms of simplicity of operation or lower costs or higher effectivity in operation or effectiveness in results or higher reliability in the results.

This object is solved by the features of the independent claims. The dependent claims define embodiments.

According to the invention, a method for detecting an object in an interior of a turbine hub of a turbine comprises sampling an interior of the turbine hub by emitting primary light into different directions and by detecting secondary light, wherein the secondary light corresponds to the primary light reflected in the interior of the turbine hub, generating at least one point cloud based on said sampling, and detecting an object in the interior of the turbine hub based on the at least one point cloud.

Thereby, detection of loose objects inside a turbine hub regardless of size, weight and material of the object is possible. The loose objects can move, relatively to the turbine hub. In particular, small, soft or light objects can be detected which oftentimes cannot be detected by other techniques for example by acoustic techniques due to a lack of noise.

In another example, the method further comprises triggering a control action for the turbine in response to detecting an object in the interior of the turbine hub. By performing an action after a detection of an object which could damage the turbine, the turbine can be protected.

The control action can at least be one of stopping the turbine, reducing a speed of the turbine, or outputting a warning. Such control actions are appropriate to prevent damage to the turbine.

The turbine is in particular a wind turbine. However, the method described above is not limited to the detection of objects inside the interior of a turbine hub of a wind turbine. The method can also be applied to any kind of turbine, for example gas or water turbines, or other rotating or moving systems.

According to an embodiment, the method further comprises determining a type of the object based on the point cloud. Determining a type of the object means that the object is analyzed. By analyzing the object, additional information about the object can be gained. This information can help to decide if and which control action might be necessary. A tailored response becomes possible. The processing can be simpler based on a point cloud than, e.g., than audio processing. By sampling - e.g., scanning or otherwise testing in a spatially resolved manner - the interior using the point cloud, e.g., the dimensions of the object and thus a reliable measure of the threat level caused by the object can be determined.

For example, said determining the type of the object comprises determining at least one of a size of the object, a material of the object, and a weight of the object.

It is advantageous to know how big the object inside the turbine hub is if an object in the turbine hub has been detected. Furthermore, knowing weight and material of the object is beneficial. For example, a small object made of metal might be more destructive than a large object made of organic material. Knowing the properties of the object helps to better assess the danger and to better weigh possible consequences for the turbine.

In an example, the method further comprises selecting the control action from a plurality of candidate control actions depending on the type of the object. If a plurality of control actions are provided and the decision for the control action is made depending on the type of the object, an appropriate control action can be performed, which is individually suitable for any situation. For instance, unnecessary shutdown of the turbine may be avoided if only a small and light object is detected. Tailored maintenance may be triggered.

Further, said determining the type of the object can comprise analyzing the point cloud based on a machine-learning algorithm. Alternatively or additionally, it is possible that determining the type of the object comprises analyzing the point cloud by humans. Humans can determine the type of the object based on their expert knowledge which facilitates and improves the determination of the object which serves as a basis for a possible control action.

Example machine-learning algorithms include, e.g., neural networks or support vector machines. Reinforcement learning would be possible.

Additionally, said detecting the object in the interior of the turbine hub can comprise analyzing the point cloud based on a machine-learning algorithm or by humans. Machine-learning algorithms and humans can facilitate and improve the detection of the object in a turbine hub. A loose object can be detected faster and more reliable.

According to a further embodiment, said generating of at least one point cloud based on the secondary light can comprise generating at least two point clouds based on said sampling executed at multiple points in time. This allows a temporal relationship of point clouds to be established.

In one example, said detecting of the object comprises determining differences between different ones of the at least two point clouds. This is a simple, but efficient method to detect a loose object which is moving and results in a difference between two point clouds detected one after another.

In addition, said determining of the type of the object can comprise determining differences between different ones of the at least two point clouds. The analysis of the object can also be based on the differences between point clouds. For instance, a reference point cloud may be associated with a safe state without loose objects. Then, differences can be tracked vis-a-vis this reference point cloud. Different point clouds can give information about the object leading to better risk management.

In one example, the method can further comprise quantifying the difference between the different ones of the at least two point clouds with a quantification value. The quantification value can be indicative of an amount of different between the multiple point clouds. Larger quantification values can be indicative of larger or more objects being loose.

The method can further comprise triggering a control action for the turbine in response to the quantification value being above a threshold value. Unnecessary false alarms for minor differences can thus be avoided.

Moreover, the control action can be selected from a plurality of candidate control actions depending on a multi-threshold comparison between the quantification value and multiple threshold values, wherein different ones of the multiple threshold values are associated with different ones of the plurality of candidate control actions. Depending on the properties that can be assigned to the object, different actions can be initiated. This allows the turbine to be controlled in a targeted and individually adjusted manner.

The method can further comprise sampling of the interior using multiple perspectives. This allows different areas of the turbine hub to be observed simultaneously.

In analogy to the methods described above, a calculation unit for detecting an object in an interior of a turbine hub can be configured as follows. The calculation unit can be configured to control at least one light source in the turbine hub to emit primary light. The calculation unit can further be configured to control at least one photon detector in the turbine hub to detect secondary light, wherein the secondary light corresponds to the primary light reflected in the interior of the turbine hub. The calcuation unit can further be configured to generate at least one point cloud based on the primary light and the at least one secondary light. The calculation unit can further be configured to detect an object in the interior of the turbine hub based on the at least one point cloud. With this system, loose objects in the interior of the turbine hub regardless of size, weight and material of the object can be detected. The object detection system can record a number of point clouds and can do continuous analysis of the object for example if something is moving around. The system is able to work and can measure distances in complete darkness or in environments with low or irregular lighting.

A computer program product or a computer program or a computer-readable storage medium can include program code that can be loaded by at least one processor. Upon loading and executing the program code, the at least one processor can control at least one light source in a turbine hub to emit primary light. The at least one processor can control at least one photon detector in the turbine hub to detect secondary light. The secondary light corresponds to the primary light reflected in the interior of the turbine hub. The at least one processor can generate at least one point cloud based on the primary light and the at least one secondary light. The at least one processor can detect an object in the interior based on the at least one point cloud.

In another embodiment, the at least one calculation unit of the object detection system is configured to analyze the at least one point cloud.

The object detection system can further comprise at least one control unit for generating a command for controlling the turbine.

In one example, the system can further comprise at least one memory for saving the at least one point cloud.

The system can further comprise at least one interface for transferring the command for controlling the turbine to a turbine drive or for sending a warning to a display.

The invention also concerns a wind turbine comprising a system for detecting an object in an interior of a turbine hub according to the invention. The wind turbine can comprises such a system, wherein the light source and the photon detector are mounted on an inner wall of the turbine hub rotating with the turbine hub.

Further, the invention concerns a turbine hub comprising at least one light source in the turbine hub for emitting at least one primary light and at least one photon detector in the turbine hub for detecting at least one secondary light, wherein the at least one secondary light corresponds to the at least one primary light reflected in the interior of the turbine hub. The turbine hub can contain at least one calculation unit for generating at least one point cloud based on the at least one secondary light detected by the at least one photon detector, and for detecting an object in the interior of the turbine hub based on the at least one point cloud.

In one embodiment, the light source and the photon detector of the wind turbine can be mounted on a stator part not rotating with the turbine hub. In this way, the detection system can scan different areas without being moved itself.

It further concerns a re-equipment kit for establishing such a detection system for a wind turbine as described above, in particular for detecting the existence of loose objects inside the wind turbine.

According to an aspect, LIDAR measurements are used to detect loose object in an interior of a turbine hub.

The features and features set out above, which are described below, can be used not only in the corresponding combinations explicitly set out, but also in other combinations or isolated, without departing from the scope of the present invention.

### BRIEF DESCRIPTION OF THE FIGURES

FIG. 1 schematically illustrates a wind turbine having at least one rotor blade and a generator according to various embodiments.
FIG. 2 schematically illustrates cross section view of a turbine hub of a wind turbine having one optical detection system attached to an inner wall of the turbine hub according to various embodiments.
FIG. 3 schematically illustrates functional components of the object detection system according to various embodiments.
FIG. 4 schematically illustrates cross section view of a turbine hub of a wind turbine having three optical detection systems attached to an inner wall of the turbine hub according to various embodiments.
FIG. 5 is a flowchart of a method for detecting an object in a turbine hub according to various embodiments.
FIG. 6 is a flowchart of a method for detecting an object in a turbine hub according to various embodiments.
FIG. 7 is a flowchart of a method for detecting an object in a turbine hub according to various embodiments.
FIG. 8 is a flowchart of a method for detecting an object in a turbine hub according to various embodiments.

### DETAILED DESCRIPTION OF EMBODIMENTS

The above-described characteristics, features, and advantages of this invention, as well as the manner in which they will be achieved, will become clearer and more clearly understood in connection with the following description of the embodiments, which will be described in detail in conjunction with the drawings.

Hereinafter, various examples will be described with reference to preferred embodiments with reference to the drawings. In the figures, similar reference characters designate the same or similar elements. The figures are schematic representations of various embodiments of the invention. Elements shown in the figures are not necessarily drawn to scale. Rather, the various elements shown in the figures are reproduced in such a way that their function and general purpose will be understood by those skilled in the art. Connections and couplings between functional units and elements illustrated in the figures may also be implemented as an indirect connection or coupling. A connection or coupling may be implemented by wire or wireless. Functional units can be implemented as hardware, software or a combination of hardware and software.

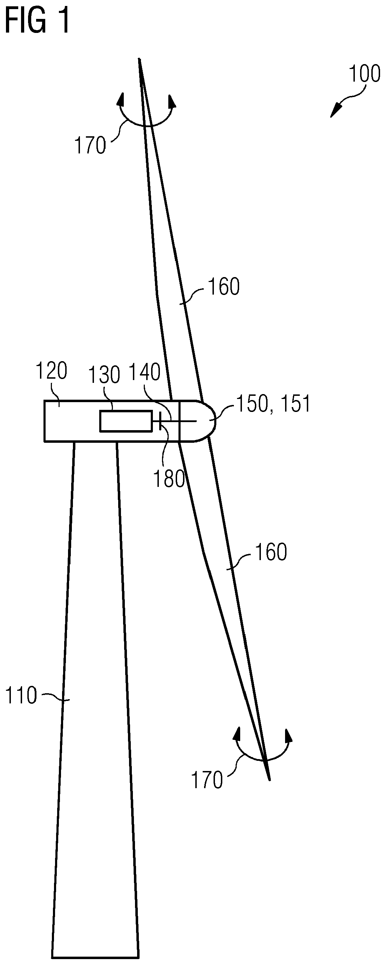

FIG. 1 illustrates aspects relating to a wind turbine 100. The wind turbine 100 includes a tower 110 and a nacelle 120. The nacelle 120 is rotatably connected to a system rotor 151, which in particular has a turbine hub 150. On the system rotor 205, in the example of FIG. 1, two rotor blades 160 are attached. In other examples, more or less rotor blades could be present. In some examples, it may be possible that the pitch angle or pitch angle 170 of the various rotor blades 160 can be adjusted.

The changing of the pitch angle 180 of a rotor blade 160 corresponds to a rotation of the corresponding rotor blade 160 about its longitudinal axis. Changing the pitch angle 180 causes the flow behavior of wind on the respective rotor blade 180 to change and thus the torque generated by the respective rotor blade 180 to change. An aerodynamic brake can be implemented in this way. The buoyancy can be reduced and a stall can be brought about or avoided. The power flow to a generator 130 of the wind turbine 100 may be changed. In the case of a gearless wind power plant (direct drive), the generator 130 is directly connected to the system rotor 151 without a transmission in the driveline 140 of generator 130. In other examples, wind turbine 100 may also include a transmission in driveline 140 (not shown in FIG. 1). The wind turbine 100 further comprises an electric or mechanical brake 180.

According to various examples described herein, a detection system can be provisioned in the turbine hub 150, to detect loose objects in the turbine hub 150 and to trigger appropriate countermeasures.

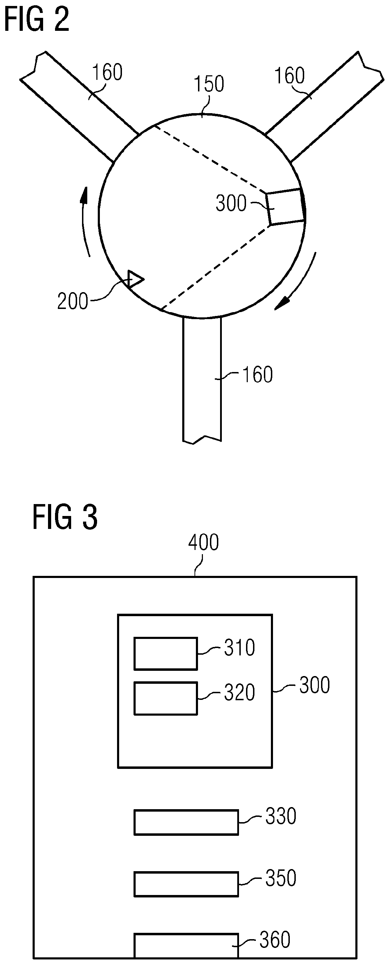

FIG. 2 shows a turbine hub 150 of a wind turbine 100 with three rotor blades 160. The wind turbine 100 further comprises a system for detecting an object 200 in an interior of a turbine hub 150. For example, an optical detection system 300 is arranged inside the turbine hub 150. The optical detection system 300 can comprise a light source 310 and a photon detector 320. The light source 310 and the photon detector can be mounted on an inner wall of the turbine hub 150 rotating with the turbine hub 150. Alternatively, the light source 310 and the photon detector 320 can be mounted on a stator part not rotating with the turbine hub 150. The light source 310 in the turbine hub 150 can emit at least one primary light. The photon detector 320 in the turbine hub 150 can detect at least one secondary light, wherein the at least one secondary light corresponds to the at least one primary light reflected in the interior of the turbine hub 150. The optical detection system 300 can comprise further units for data processing. In FIG. 2, the field of view of the optical detection system 300 is indicated by the dashed lines. The optical detection system 300 is positioned so that a part of the turbine hub 150 is observed accordingly. As loose objects move around due to rotation, the objects can be detected by a single optical detection system.

The optical detection system 300 can be implemented by a LiDAR (light detection and ranging) system. Thus, the light source 310 and the photon detector 320 can be part of a LiDAR system. Different types of LiDAR systems can be implemented. For example, a flash LiDAR system can be used. By using flash LiDAR, the entire field of view is illuminated with a wide diverging laser beam in a single pulse. This is in contrast to conventional scanning LiDAR, which uses a collimated laser beam that illuminates a single point at a time, and the beam is raster scanned to illuminate the field of view point-by-point. In case of a conventional scanning LiDAR, which uses a collimated laser beam raster scanned to illuminate the field of view point-by-point, a deflection unit to deflect the laser beam is additionally required.

The illumination method of a flash LiDAR requires a different detection scheme as well. In both scanning and flash LiDAR, a time-of-flight camera is used as photon detector 320 to collect information about both the 3-D location and intensity of the light incident on it in every frame. However, in scanning LiDAR, this camera contains only a point sensor, while in flash LiDAR, the camera contains either a 1-D or a 2-D sensor array, each pixel of which collects 3-D location and intensity information. In both cases, the depth information is collected using the time of flight of the laser pulse i.e., the time it takes each laser pulse to hit the target and return to the sensor, which requires the pulsing of the laser and acquisition by the camera to be synchronized. The LIDAR measurements yield point clouds. The point clouds include data points indicative of a depth position of the objects in the environment. Thereby, objects can be detected. By using LiDAR, it is possible precisely sample the interior of the turbine hub 150, to thereby obtain information on the size and form of a loose object. This makes it much easier to determine what is loose and what size it has.

The advantage of a flash LiDAR system is that the system is inexpensive and robust. The generally shorter range of flash LIDAR systems compared to conventional LIDAR systems is nevertheless sufficient for the intended function of object detection in the case of average-sized wind turbines.

In FIG. 3, possible components of the system 400 for detecting an object 200 in an interior of a turbine hub 150 are illustrated. The system 400 can comprise at least one light source 310 in the turbine hub 150 for emitting at least one primary light. The system 400 can comprise at least one photon detector 320 in the turbine hub 150 for detecting at least one secondary light, wherein the at least one secondary light corresponds to the at least one primary light reflected in the interior of the turbine hub 150. The at least one light source 310 and the at least one photon detector 320 can be considered together as optical detection system 300.

Further, the object detection system 400 can comprises a calculation unit 330. The calculation unit 330 can load and execute program code loaded from a memory 350. The calculation unit 330 can be configured for controlling the light source 310 and the detector 320. The at least one calculation unit is configured to control the optical detection system 300 to thereby sample the interior of the turbine hub 150. The calculation unit 330 can generate at least one point cloud based on said sampling. The calculation unit can detect an object 200 in the interior of the turbine hub 150 based on the at least one point cloud. The calculation unit 330 can be configured to analyze the at least one point cloud. The calculation unit 330 can be configured to determine a type of the object 200 based on the point cloud. The calculation unit 330 can be configured to run machine-learning algorithms for the object analysis. The calculation unit 330 can be configured for generating a command for controlling the turbine. The memory 350 can be configured for saving the at least one point cloud. Saved point clouds can be analyzed afterwards, for example by humans or machine-learning algorithms to determine properties of the loose object. The calculation unit 330and the memory 350 can be located in the turbine hub 150, but can also be located in the wind turbine 100 in general. The calculation unit 330 and the memory 350 can also be implemented in the existing hardware of the wind turbine 100.

The system 400 can further comprise at least one interface 360 for transferring the command for controlling the turbine to a turbine drive or for sending a warning to a display.

At least parts of the system 400 could be retrofitted to the turbine hub 150.

It is possible to design a re-equipment kit, also called a retrofit. Different implementation options are conceivable. The re-equipment kit can comprise at least one optical detection system 300 and software which is provided to run on already established computing units of the wind turbine 100. The re-equipment kit can also comprise additional computing units which can be connected to the existing computing units of the wind turbine 100. By retrofitting a wind turbine, the safety of the turbine can be increased quickly and easily in a cost-effective way.

In addition, it is possible to combine different object detection systems. For example, a combination of the object detection system described herein and an acoustical detection system using microphones. The different detection systems can determine different properties of the objects. Cross-checking is possible. By the combination, a faster and more reliable determination of the object can be achieved.

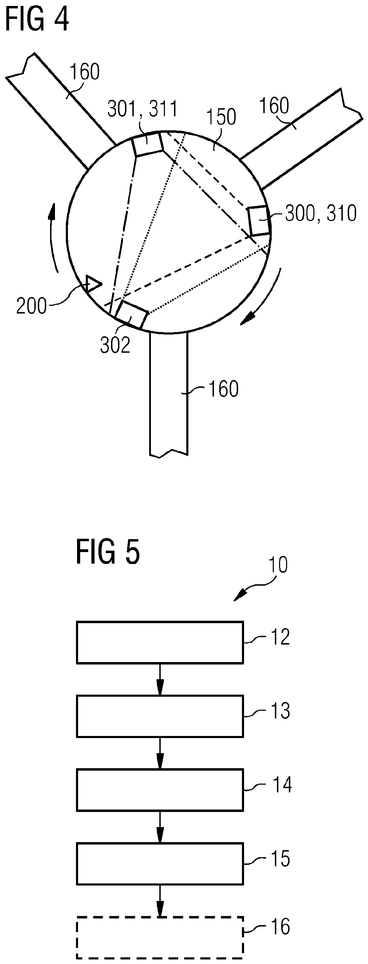

In FIG. 4, a turbine hub 150 of a wind turbine 100 with three optical detection systems 300, 301, 302 is schematically illustrated. In general, the number of optical detection systems is not limited. The three optical detection systems 300, 301, 302 can correspond to three LiDAR systems. The plurality of light sources and the plurality of photon detectors can form a plurality of LiDAR systems. The system shown in FIG. 4 can be used for a method for detecting an object 200 in an interior of a turbine hub 150 which comprises emitting further primary light by a further light source 311, wherein the further light source 311 and the light source 310 are arranged at different poses with respect to the turbine hub 150. The light source 310 and the at least one further light source 311 can be operated for example simultaneously or alternatively in a controlled manner.

In FIG. 4, the field of views of the three optical detection systems 300, 301, 302 is indicated by the dashed lines, dash-dotted and dotted lines, respectively. The optical detection systems 300 can located on different positions so that the area of the turbine hub 150 observed by the optical detection systems can be extended. FIG. 4 shows an example, how three detections systems can be arranged in a turbine hub that the field of views of the optical detection systems cover the entire hub, using different perspectives. In general, a plurality of optical detection systems 300, 301, 302 can be arranged such as the whole interior of the turbine hub is covered by the plurality of primary lights. Blind spots may be avoided. The optical detections systems can be positioned at the inner wall of the turbine hub or can have the same distance from each other or can have the largest possible distance to each other. Depending on the angle of the field view of the optical detection systems fewer or more detection systems can be used to detect loose objects. It is not necessarily a requirement to cover the entire turbine hub with multiple LiDAR systems as loose objects will move around due to rotation.

FIG. 5 shows an embodiment of a method 10 for detecting an object 200 in an interior of a turbine hub 150 of a turbine. The method 10 can comprise sampling 12 an interior of the turbine hub 150 by emitting primary light into different directions and by detecting 13 secondary light, wherein the secondary light corresponds to the primary light reflected in the interior of the turbine hub 150, generating 14 at least one point cloud based on said sampling, and detecting 15 an object 200 in the interior of the turbine hub 150 based on the at least one point cloud.

Finally, the method can comprise triggering 16 a control action for the turbine in response to detecting an object 200 in the interior of the turbine hub 150. Thus, stopping the turbine if any loose object is detected is possible. For example, the control action is at least one of stopping the turbine, reducing a speed of the turbine, or outputting a warning. For example, by adjusting the pitch angle 170 of the various rotor blades 160, the speed of the turbine can be reduced. The turbine can be stopped by applying the electric or mechanical brake 180. The warning can for example be optically by showing a message or a sign in a certain color or acoustically by outputting a certain sound.

In another embodiment, said detecting 15 the object 200 in the interior of the turbine hub 150 can comprise analyzing the point cloud based on a machine-learning algorithm.

In another embodiment, said detecting 15 of the object 200 comprises determining differences between different ones of the at least two point clouds.

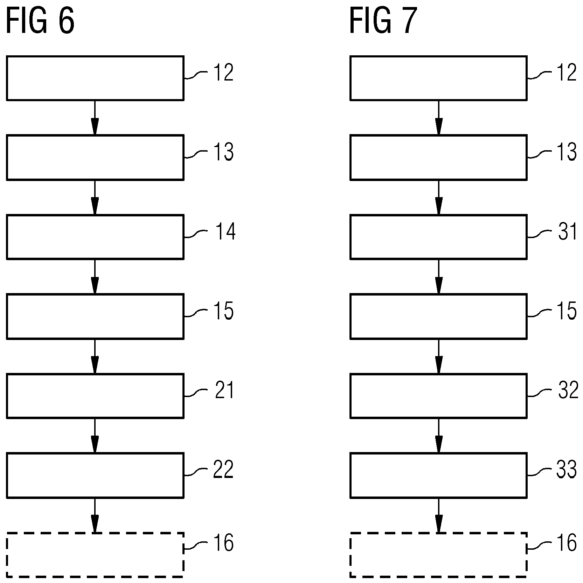

The method 10 in FIG. 6 is a further embodiment for detecting an object 200 in an interior of a turbine hub 150 of a turbine. The method 10 can comprise sampling 12 an interior of the turbine hub 150 by emitting primary light into different directions and by detecting 13 secondary light, wherein the secondary light corresponds to the primary light reflected in the interior of the turbine hub 150, generating 14 at least one point cloud based on said sampling, and detecting 15 an object 200 in the interior of the turbine hub 150 based on the at least one point cloud. This corresponds to FIG. 5. Further, the method can comprise determining 21 a type of the object 200 based on the point cloud and selecting 22 the control action from a plurality of candidate control actions depending on the type of the object 200. Said determining 21 the type of the object 200 can comprise determining for example at least one of a size of the object 200, a material of the object 200, and a weight of the object 200. Other properties of the object can be determined. Said determining 21 the type of the object 200 can also comprise analyzing the point cloud based on a machine-learning algorithm. Further, the method can comprise triggering 16 a control action for the turbine in response to detecting an object 200 in the interior of the turbine hub 150. In particular, the control action can depend on the type of the object 200. For instance, depending on the type of the object, a more invasive or less invasive control action may be triggered.

In FIG. 7, a further embodiment of a method 10 for detecting an object 200 in an interior of a turbine hub 150 of a turbine is illustrated by a flowchart. The method 10 can comprise sampling 12 an interior of the turbine hub 150 by emitting primary light into different directions and by detecting 13 secondary, wherein the secondary light corresponds to the primary light reflected in the interior of the turbine hub 150. The method 10 can further comprise generating 14 at least one point cloud based on said sampling, wherein said generating 14 of at least one point cloud based on the secondary light comprises generating 31 at least two point clouds based on said sampling executed at multiple points in time. The method 10 can further comprise detecting 15 an object 200 in the interior of the turbine hub 150 based on the at least one point cloud. Further, the method can comprise determining 21 a type of the object 200 based on the point cloud, wherein said determining 21 of the type of the object 200 comprises determining 32 differences between different ones of the at least two point clouds. In other words or in concrete terms: a simple comparison of two subsequent point clouds or images taken by the LiDAR system can be compared. Next, the method 10 can comprise quantifying 33 the difference between the different ones of the at least two point clouds with a quantification value. Finally, the method 10 can comprise triggering 16 a control action for the turbine in response to the quantification value being above a threshold value. For example, if the difference of the at least two point clouds is beyond a certain preset limit an alarm can be raised.

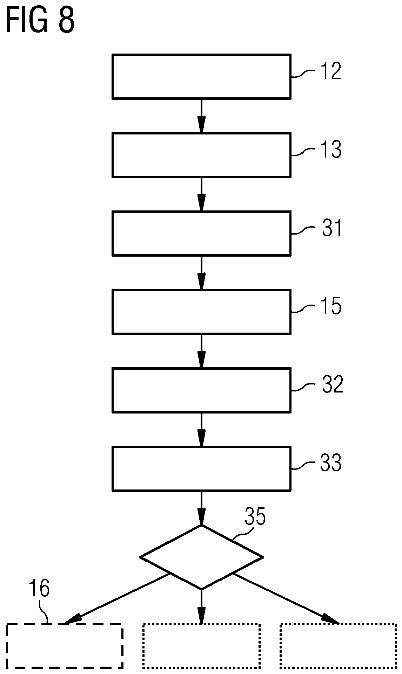

FIG. 8 shows a further embodiment of a method 10 for detecting an object 200 in an interior of a turbine hub 150 of a turbine. The method 10 can comprise sampling 12 an interior of the turbine hub 150 by emitting primary light into different directions and by detecting 13 secondary light, wherein the secondary light corresponds to the primary light reflected in the interior of the turbine hub 150. The method 10 can further comprise generating 14 at least one point cloud based on said sampling, wherein said generating 14 at least one point cloud based on the secondary light comprises generating 31 at least two point clouds generated based on the secondary light detected at multiple points in time. The method 10 can further comprise detecting 15 an object 200 in the interior of the turbine hub 150 based on the at least one point cloud. Further, the method can comprise determining 21 a type of the object 200 based on the point cloud, wherein said determining 21 of the type of the object 200 comprises determining 32 differences between different ones of the at least two point clouds. Next, the method 10 can comprise quantifying 33 the difference between the different ones of the at least two point clouds with a quantification value.

After that, a step of selecting 22 the control action from a plurality of candidate control actions depending on the type of the object 200 can be performed, wherein the control action is selected from a plurality of candidate control actions depending on a multi-threshold comparison 35 between the quantification value and multiple threshold values, wherein different ones of the multiple threshold values are associated with different ones of the plurality of candidate control actions. For instance, a warning can be shown if the quantification value is larger than a threshold size and stopping the turbine if the object is larger than a second threshold size, wherein the second threshold size is larger than the threshold size. For instance, the turbine can be stopped if the object is bigger than a certain size or simply a warning can be shown if the object is smaller. Finally, the method 10 can comprise triggering 16 a control action for the turbine in response to the quantification value being above a threshold value.

The method and system described above are not limited to the detection of objects inside the interior of a turbine hub of a wind turbine. The method and system can also be applied to any kind of turbine for example gas or water turbines, or other rotating or moving systems.

## Claims

1. A method (10) for detecting an object (200) that is loosely arranged in an interior of a turbine hub (150) of a turbine, in particular of a wind turbine, the method (10) comprising:
sampling (12) an interior of the turbine hub (150) by emitting primary light into different directions and by detecting (13) secondary light, wherein the secondary light corresponds to the primary light reflected in the interior of the turbine hub (150),
generating (14) at least one point cloud based on said sampling, and
detecting (15) an object (200) in the interior of the turbine hub (150) based on the at least one point cloud.

2. The method (10) of claim 1 further comprising:
triggering (16) a control action for the turbine in response to detecting the object (200) in the interior of the turbine hub (150).

3. The method (10) of claim 2, wherein the control action is at least one of stopping the turbine, reducing a speed of the turbine, or outputting a warning.

4. The method (10) of any one of the preceding claims, further comprising:
determining (21) a type of the object (200) based on the at least one point cloud.

5. The method (10) of claim 4, and of claim 2 or 3, further comprising:
selecting (22) the control action from a plurality of candidate control actions depending on the type of the object (200) .

6. The method (10) of claim 4 or 5, wherein said determining (21) the type of the object (200) comprises determining at least one of a size of the object (200), a material of the object (200), and a weight of the object (200) .

7. The method (10) of any one of claims 4 to 6, wherein said determining (21) the type of the object (200) comprises analyzing the at least one point cloud based on a machine-learning algorithm.

8. The method (10) of any one of the preceding claims, wherein said detecting (15) of the object (200) in the interior of the turbine hub (150) comprises analyzing the at least one point cloud based on a machine-learning algorithm.

9. The method (10) of any one of the preceding claims, wherein said generating (14) of at least one point cloud based on the secondary light comprises generating (31) at least two point clouds based on said sampling executed at multiple points in time.

10. The method (10) of claim 9, wherein said detecting (15) of the object (200) comprises determining differences between different ones of the at least two point clouds.

11. The method (10) of claim 4, and of claim 9 or 10, wherein said determining (21) of the type of the object (200) comprises determining (32) differences between different ones of the at least two point clouds.

12. The method (10) of claim 11, further comprising:
quantifying (33) the differences between the different ones of the at least two point clouds with a quantification value.

13. The method (10) of claim 12, further comprising:
triggering (16) a control action for the turbine in response to the quantification value being above a threshold value.

14. The method (10) of claim 13, wherein the control action is selected from a plurality of candidate control actions depending on a multi-threshold comparison (35) between the quantification value and multiple threshold values, wherein different ones of the multiple threshold values are associated with different ones of the plurality of candidate control actions.

15. A calculation unit (330) configured for detecting an object (200) in an interior of a turbine hub (150) of a turbine, in particular of a wind turbine, the calculation unit being configured to
control at least one light source (310) in the turbine hub (150) to emit primary light,
control at least one photon detector (320) in the turbine hub (150) to detect secondary light, wherein the secondary light corresponds to the primary light reflected in the interior of the turbine hub (150),
generate at least one point cloud based on the primary light and the at least one secondary light, and
detect an object (200) in the interior of the turbine hub (150) based on the at least one point cloud.
